# EUROPÄISCHE PATENTANMELDUNG

(11) **EP 1 705 377 A1**
(43) Veröffentlichungstag der Anmeldung: **27.09.2006**
(21) Anmeldenummer: 06003122.6
(22) Anmeldetag: 16.02.2006
(51) Int. Cl.: F04C 13/00, A22C 7/00

(54) **Beschickungsbehälter für Fleischverarbeitungsanlagen**

(30) Priorität: 24.03.2005 DE 102005013619
(71) Anmelder: Schröder Maschinenbau KG, 33824 Werther (DE)
(72) Erfinder: Brands, Kurt, 48326 Melle (DE)
(74) Vertreter: Wiebusch, Manfred

(57) **Zusammenfassung**

Beschickungsbehälter (10) für Fleischverarbeitungsanlagen, mit einem Ausgang (20), der mit mindestens einer ersten Ansaugleitung (16) einer nachfolgenden Verarbeitungseinheit (12) verbindbar ist, wobei der Ausgang (20) mit mindestens zwei Ansaugleitungen (16) von nachfolgenden Verarbeitungseinheiten (12) verbindbar ist und an dem Ausgang (20) eine Fleischweiche (14) angeordnet ist, die zwischen mindestens zwei jeweils den Ansaugleitungen (16) zugeordneten Stellungen umschaltbar ist, in denen sie jeweils den Ausgang (20) mit derjenigen Ansaugleitung (16) verbindet, der die jeweilige Stellung zugeordnet ist.

## Beschreibung

Die Erfindung betrifft einen Beschickungsbehälter für Fleischverarbeitungsanlagen, mit einem Ausgang, der mit mindestens einer ersten Ansaugleitung einer nachfolgenden Verarbeitungseinheit verbindbar ist.

In Fleischverarbeitungsanlagen wird beispielsweise Fleisch aus oben offenen Beschickungsbehältern portionsweise über eine Ansaugleitung in eine nachfolgende Verarbeitungseinheit, beispielsweise eine Massieranlage, gesaugt. Zum wechselweisen Anschluß mehrerer Verarbeitungseinheiten ist es bekannt, an dem Beschickungsbehälter zwei Ausgänge vorzusehen, von denen je einer bei Bedarf an eine nachfolgende Verarbeitungseinheit angeschlossen wird. Um das Ansaugen zu ermöglichen, muß der jeweils unbenutzte Ausgang beispielsweise mit einem Deckel verschlossen werden.

Aufgabe der Erfindung ist es, einen Beschickungsbehälter zu schaffen, mit dem der Wechsel der nachfolgenden Verarbeitungseinheit einfacher durchgeführt werden kann.

Diese Aufgabe wird erfindungsgemäß durch einen Beschickungsbehälter der eingangs genannten Art gelöst, bei dem der Ausgang mit mindestens zwei Ansaugleitungen von nachfolgenden Verarbeitungseinheiten verbindbar ist und bei dem an dem Ausgang eine Fleischweiche angeordnet ist, die zwischen mindestens zwei jeweils den Ansaugleitungen zugeordneten Stellungen umschaltbar ist, in denen sie jeweils den Ausgang mit derjenigen Ansaugleitung verbindet, der die jeweilige Stellung zugeordnet ist.

Dadurch sind keine Umbaumaßnahmen erforderlich, um das Fleisch aus dem Beschickungsbehälter wahlweise in eine der nachfolgenden Verarbeitungseinheiten zu überführen. Es ergibt sich somit eine erhebliche Zeit- und Aufwandsersparnis. Zudem können beispielsweise mehr als 2 Ansaugleitungen an der Fleischweiche umschaltbar sein, so daß der Einsatzbereich des Beschickungsbehälters erweitert wird.

Vorteilhafte Ausgestaltungen der Erfindung ergeben sich aus den Unteransprüchen.

Vorzugsweise verschließt die Fleischweiche in den jeweilige Stellungen die jeweils nicht mit dem Ausgang verbundenen Ansaugleitungen. Dadurch werden offene Ansaugleitungen vermieden, und es ist kein Verschluß der Ansaugleitungen beispielsweise mit Deckeln notwendig. Dies bedeutet eine Verbesserung der Hygiene.

Vorzugsweise ist die Fleischweiche in einem geschlossenen Gehäuse angeordnet, an das die Ansaugleitungen und der Ausgang angeschlossen sind. Die Fleischweiche ist somit in einem geschlossenen System aus Ansaugleitungen, ihrem Gehäuse und dem Beschickungsbehälter angeordnet, das auch während eines Umschaltvorganges der Fleischweiche weiterhin nach außen abgeschlossen ist. Dies ist aus hygienischen Gründen vorteilhaft.

In einer bevorzugten Ausführungsform ist die Fleischweiche um eine Drehachse drehbar und weist an ihrem Umfang eine Wand auf, in der eine Weichenöffnung angeordnet ist, die mit dem Ausgang des Beschickungsbehälters verbunden ist. In den jeweiligen Stellungen der Fleischweiche ist die Weichenöffnung jeweils vor der mit dem Ausgang verbundenen Ansaugleitung angeordnet, und die Wand verschließt die jeweils nicht mit dem Ausgang verbundenen Ansaugleitungen. Auf diese Weise ergibt sich ein einfacher und effektiver Aufbau der Fleischweiche, bei dem stets zuverlässig die zur Zeit nicht benötigten Ansaugleitungen verschlossen sind.

In einer besonders bevorzugten Ausführungsform ist die Fleischweiche tonnenförmig und weist einen Weichenkanal auf, der eine Weichenöffnung in einer Umfangswand der Fleischweiche mit dem Ausgang des Beschickungsbehälters verbindet, und die Fleischweiche ist um eine durch den Ausgang gehende Drehachse drehbar. Dieser Aufbau ermöglicht bei geringen Baumaßen der Fleischweiche einen störungsfreien Transport des Fleisches durch den Weichenkanal. Der Weichenkanal ist beispielsweise nach oben offen und kann beispielsweise einen über dem Weichenkanal angeordneten Ausgang des Beschickungsbehälters mit darunter seitlich angeordneten Ansaugleitungen verbinden. Es ergibt sich eine besonders geringe Bauhöhe.

Vorzugsweise ist eine maschinensteuerbare Umschalteinrichtung vorgesehen, mit der die Fleischweiche zwischen ihren Stellungen umschaltbar ist. Dies ermöglicht eine Automatisierung der Umschaltung der Fleischweiche. Bei der Umschalteinrichtung kann es sich beispielsweise um einen Positionierzylinder handeln, der an einem Schwenkarm der Fleischweiche angreift.

Vorzugsweise weist der Beschickungsbehälter in herkömmlicher Weise einen Trichter auf, an dessen unterem Ende der Ausgang angeordnet ist.

Bevorzugt ist die Fleischweiche in eine Reinigungsposition schwenkbar, in der sie zur Reinigung zugänglich ist. Beispielsweise kann die Fleischweiche seitlich unter dem Beschickungsbehälter herausgeschwenkt werden.

Im folgenden wird ein bevorzugtes Ausführungsbeispiel der Erfindung anhand der Zeichnung näher erläutert.

### Es zeigen:

- Fig. 1: eine schematische Seitenansicht eines Beschickungsbehälters mit einer darunter angeordneten Fleischweiche;
- Fig. 2: einen vergrößerten Querschnitt der Fleischweiche;
- Fig. 3: eine Draufsicht auf die Fleischweiche ohne den Beschikkungsbehälter; und
- Fig. 4: eine Draufsicht auf den Beschickungsbehälter mit in eine Reinigungsposition geschwenkter Fleischweiche.

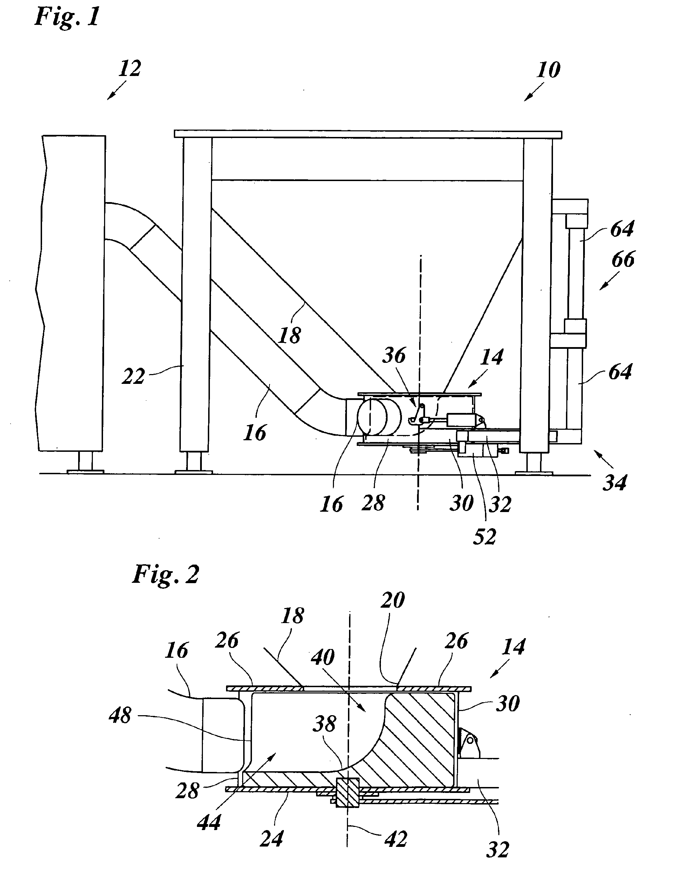

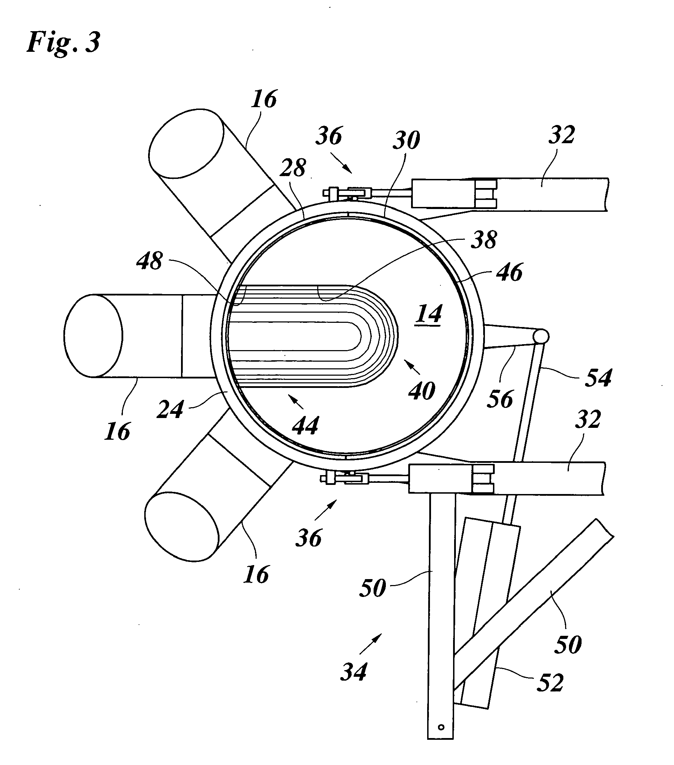

Figur 1 zeigt einen Beschickungsbehälter 10 für nachfolgende Fleischverarbeitungseinheiten, bei denen es sich beispielsweise um eine beispielhaft dargestellte Massieranlage 12 handelt. Am unteren Ende des Beschickungsbehälters 10 ist eine in den Figuren 2 und 3 im Detail dargestellte Fleischweiche 14 angeordnet, an der drei zu den nachfolgenden Verarbeitungseinheiten führende Ansaugleitungen 16 angeordnet sind. Von diesen ist in Figur 1 eine vordere angeschnitten dargestellt, eine mittlere mit der dargestellten Massieranlage 12 verbunden und eine hintere von der Fleischweiche 14 verdeckt.

Der Beschickungsbehälter 10 bildet einen Trichter 18, der am unteren Ende in einem kreisrunden Ausgang 20 (Figur 2) über der Fleischweiche 14 mündet. Am oberen Ende ist der Beschickungsbehälter 10 offen. Er wird von vier am Umfang des Behälters angeordneten Beinen 22 getragen.

Die Fleischweiche 14 ist in einem geschlossenen Gehäuse angeordnet, das durch eine scheibenförmigen Bodenplatte 24, eine den Ausgang 20 des Beschickungsbehälters 10 enthaltende obere Platte 26 und eine aus zwei Teilen 28 und 30 bestehende Umfangswand gebildet wird. Die obere Platte 26 und der erste Teil 28 der Umfangswand sind fest am Beschickungsbehälter 10 angebracht. Die Ansaugleitungen 16 münden in den ersten Teil 28 der Umfangswand, wie insbesondere in Figur 3 gut zu sehen ist. Das geschlossene Gehäuse ist lediglich zu den Ansaugleitungen 16 und zu dem Ausgang 20 geöffnet.

Der zweite Teil 30 der Umfangswand ist mit der Bodenplatte 24 fest verbunden und ist an horizontal verlaufenden Tragarmen 32 eines Gestells 34 gehalten.

Die Teile 28 und 30 der Umfangswand des Gehäuses der Fleischweiche 14 bilden jeweils einen sich halbkreisförmig erstreckenden Teil der Umfangswand. An den Nahtstellen zwischen den Teilen 28 und 30 sind diese mit Verriegelungseinrichtungen 36 aneinander verriegelt. In Figur 1 ist eine vordere der beiden Verriegelungseinrichtungen 36 zu sehen, während in Figur 3 beide Verriegelungseinrichtungen 36 dargestellt sind.

Die in dem Gehäuse angeordnete Fleischweiche 14 ist im wesentlichen tonnenförmig und weist einen an der Oberseite offenen Weichenkanal 38 auf, der an seiner Oberkante annähernd U-förmig ist, wobei ein runder Abschnitt unter dem kreisförmigen Ausgang 20 des Beschickungsbehälters 10 angeordnet ist und an dessen Maße angepaßt ist. Die Fleischweiche 14 ist drehbar um eine vertikale Achse 42 an der Bodenplatte 24 ihres Gehäuses gelagert. Die Drehachse 42 geht mittig durch den Ausgang 20 des Beschickungsbehälters 10.

Der Weichenkanal 38 weist einen in Bezug auf die Drehachse 42 radialen Abschnitt 44 auf, der im unteren Bereich halbschalenförmig gekrümmt ist und an den Durchmesser der Mündungen der Ansaugleitungen 16 angepaßt ist. In der in den Figuren 1 bis 3 dargestellten Stellung ist der radiale Abschnitt 44 vor der mittleren Ansaugleitung 16 angeordnet, so daß der Ausgang 20 des Beschickungsbehälters 10 über den Weichenkanal 38 mit dieser Ansaugleitung 16 verbunden ist.

Die in Figur 1 vorderen und hinteren Ansaugleitungen 16 sind dabei durch eine Umfangswand 46 der Fleischweiche 14 verschlossen, wie gut in Figur 3 zu erkennen ist. Der Weichenkanal 38 bildet eine Weichenöffnung 48 in der Umfangswand 46. Diese ist, wie der gesamte Weichenkanal 38, nach oben geöffnet. Jenseits des Ausgangs 20 wird der Weichenkanal 38 jedoch von der oberen Platte 26 des Gehäuses abgedeckt.

An Armen 50 des Gestells 34 ist eine Umschalteinrichtung in Form eines Positionierzylinders 52 schwenkbar angebracht, der mit einer Kolbenstange 54 an einem Schwenkarm 56 angreift, welcher durch die Bodenplatte 24 des Gehäuses hindurch drehfest mit der Fleischweiche 14 verbundenen ist. Durch Verstellen der Kolbenstange 54 im Positionierzylinder 52 ist die Fleischweiche 14 in verschiedene Stellungen schwenkbar, in denen jeweils der Weichenkanal 38 den Ausgang 20 mit einer der Ansaugleitungen 16 verbindet.

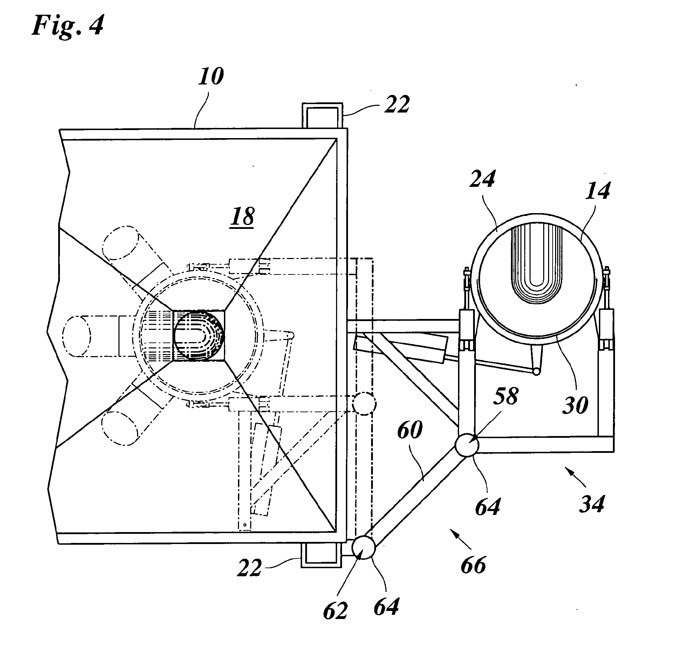

Die Fleischweiche 14 ist zusammen mit der an dem Gestell 34 befestigten Bodenplatte 24 und dem in den Figuren 1 bis 3 rechten Teil 30 der Umfangswand ihres Gehäuses in eine Reinigungsposition schwenkbar. Die zur Reinigung herausgeschwenkte Fleischweiche 14 ist in Figur 4 dargestellt.

Das Gestell 34 ist um eine erste vertikale Schwenkachse 58 schwenkbar an einem horizontalen Arm 60 gelagert. Der Arm 60 ist wiederum um eine zweite vertikale Schwenkachse 62 schwenkbar an einem der Beine 22 befestigt. Die Schwenkachsen 58 und 62 bilden zusammen mit dem Arm 60 und vertikalen Streben 64 (Figur 1) eine Schwenkeinrichtung 66, mit der die Fleischweiche 14 aus der in Figur 4 gestrichelt dargestellten Betriebsposition in die Reinigungsposition schwenkbar ist. In der Reinigungsposition ist die Fleischweiche 14 von oben frei zugänglich neben dem Beschickungsbehälter 10 angeordnet. Insbesondere ist der Weichenkanal 38 frei zugänglich, und die Fleischweiche 14 kann ggf. von ihrer Lagerung an der Bodenplatte 24 abgenommen und entnommen werden.

Bei dem Beschickungsbehälter 10 kann es sich um einen Behälter aus Edelstahl mit einem Fassungsvermögen beispielsweise im Bereich von 2500 Liter bis 6000 Liter handeln.

Die tonnenförmige Fleischweiche 14 ist beispielsweise aus Kunststoff hergestellt, etwa aus den Materialien Polyethylen (PE) oder Polyoxymethylen/Polyacetal (POM), die aufgrund ihrer guten Chemikalienfestigkeit bevorzugt werden.

Der Durchmesser der Ansaugleitungen 16 beträgt beispielsweise wahlweise 150 mm oder 200 mm.

## Patentansprüche

1. Beschickungsbehälter (10) für Fleischverarbeitungsanlagen, mit einem Ausgang (20), der mit mindestens einer ersten Ansaugleitung (16) einer nachfolgenden Verarbeitungseinheit (12) verbindbar ist, **dadurch gekennzeichnet, daß** der Ausgang (20) mit mindestens zwei Ansaugleitungen (16) von nachfolgenden Verarbeitungseinheiten (12) verbindbar ist und daß an dem Ausgang (20) eine Fleischweiche (14) angeordnet ist, die zwischen mindestens zwei jeweils den Ansaugleitungen (16) zugeordneten Stellungen umschaltbar ist, in denen sie jeweils den Ausgang (20) mit derjenigen Ansaugleitung (16) verbindet, der die jeweilige Stellung zugeordnet ist.

2. Beschickungsbehälter (10) nach Anspruch 1, **dadurch gekennzeichnet, daß** die Fleischweiche (14) in den jeweiligen Stellungen die jeweils nicht mit dem Ausgang (20) verbundenen Ansaugleitungen (16) verschließt.

3. Beschickungsbehälter (10) nach Anspruch 1 oder 2, **dadurch gekennzeichnet; daß** die Fleischweiche (14) in einem geschlossenen Gehäuse (24, 26, 28, 30) angeordnet ist, an das die Ansaugleitungen (16) und der Ausgang (20) angeschlossen sind.

4. Beschickungsbehälter (10) nach einem der vorstehenden Ansprüche, **dadurch gekennzeichnet, daß** die Fleischweiche (14) um eine Drehachse (42) drehbar ist und an ihrem Umfang eine Wand (28) aufweist, in der eine Weichenöffnung (48) angeordnet ist, die mit dem Ausgang (20) des Beschickungsbehälters (10) verbunden ist, und daß in den jeweiligen Stellungen der Fleischweiche (14) die Weichenöffnung (48) jeweils vor der mit dem Ausgang (20) verbundenen Ansaugleitung (16) angeordnet ist und die Wand (28) die jeweils nicht mit dem Ausgang (20) verbundenen Ansaugleitungen (16) verschließt.

5. Beschickungsbehälter (10) nach einem der vorstehenden Ansprüche, **dadurch gekennzeichnet, daß** die Fleischweiche (14) tonnenförmig und ist und einen Weichenkanal (38) aufweist, der eine Weichenöffnung (48) in einer Umfangswand (28, 30) der Fleischweiche (14) mit dem oberhalb des Weichenkanals (38) angeordneten Ausgang (20) des Beschickungsbehälters (10) verbindet, und daß die Fleischweiche (14) um eine durch den Ausgang (20) gehende Drehachse (42) drehbar ist.

6. Beschickungsbehälter (10) nach einem der vorstehenden Ansprüche, **dadurch gekennzeichnet, daß** eine maschinensteuerbare Umschalteinrichtung (52) vorgesehen ist, mit der die Fleischweiche (14) zwischen ihren Stellungen umschaltbar ist.

7. Beschickungsbehälter (10) nach einem der vorstehenden Ansprüche, **dadurch gekennzeichnet, daß** der Beschickungsbehälter (10) einen Trichter (18) aufweist, an dessen unterem Ende der Ausgang (20) angeordnet ist.

8. Beschickungsbehälter (10) nach einem der vorstehenden Ansprüche, **dadurch gekennzeichnet, daß** die Fleischweiche (14) in eine Reinigungsposition schwenkbar ist, in der sie zur Reinigung zugänglich ist.
